# EUROPÄISCHE PATENTSCHRIFT

(11) **EP 1 886 146 B1**
(45) Veröffentlichungstag und Bekanntmachung des Hinweises auf die Patenterteilung: **06.04.2011**
(21) Anmeldenummer: 06753953.6
(22) Anmeldetag: 29.05.2006
(51) Int. Cl.: G01N 35/10

(54) **MIKRODISPENSER UND ZUGEHÖRIGES BETRIEBSVERFAHREN**
MICRODISPENSER AND ASSOCIATED OPERATING METHOD
MICRODISTRIBUTEUR ET PROCEDE CORRESPONDANT POUR L'UTILISER

(30) Priorität: 03.06.2005 DE 102005025640
(43) Veröffentlichungstag der Anmeldung: 13.02.2008
(73) Patentinhaber: Scienion AG, 12489 Berlin (DE)
(72) Erfinder: EICKHOFF, Holger, 14195 Berlin (DE); WURZEL, Christian, 12203 Berlin (DE)
(74) Vertreter: Beier, Ralph
(86) Internationale Anmeldenummer: PCT/EP2006/005114
(87) Internationale Veröffentlichungsnummer: WO 2006/128662

(56) Entgegenhaltungen:
- EP-A- 0 469 444
- EP-A2- 0 900 594
- WO-A-2004/099059
- WO-A1-03/054518
- GB-A- 2 216 259
- US-A- 4 162 030
- US-A- 6 092 695
- US-B1- 6 343 717
- US-B1- 6 401 769
- WEHL, WOLFGANG: "Akustik und Fluidmechanik in Kanälen und Düsen von Tintenschreibwerken, Dissertation TU München, 2. Auflage" [Online] 2002, , XP002394773 Gefunden im Internet: URL:http://www.mm.hs-heilbronn.de/wehl/fil es/Dissertation_Wehl_1984.pdf> [gefunden am 2006-08-11] in der Anmeldung erwähnt

## Beschreibung

Die Erfindung betrifft einen Mikrodispenser zum dispensieren einer flüssigen Probe in einem Dispensiergerät sowie ein zugehöriges Betriebsverfahren gemäß dem Oberbegriff der nebengeordneten Ansprüche.

Mikrodispenser sind beispielsweise aus WO 99/30168 bekannt und werden unter anderem für biotechnologische oder chemischtechnologische Aufgaben eingesetzt, um kleine Flüssigkeitsvolumina in Form von Mikrotropfen kontrolliert abzugeben. Ein Beispiel hierfür ist die Herstellung von miniaturisierten DNS-Arrays für gentechnische Anwendungen, wobei durch eine geringe Tropfengröße eine hohe Klohdichte erzielt wird, wofür piezoelektrisch betätigte Mikrodispenser besonders gut geeignet sind. Die bekannten Mikrodispenser bestehen aus einer Glaskapillare zur Aufnahme der zu dispensierenden Probenflüssigkeit, wobei die Glaskapillare zur Abgabe der Mikrotropfen eine Düse aufweist und zur Befüllung mit der Probenflüssigkeit eine Schlauchzuleitung aufweist. Das Ausstoßen der Mikrotropfen aus der Glaskapillare wird bei den bekannten Mikrodispensern durch einen Piezoaktor bewirkt, der die Glaskapillare im Bereich einer Engstelle mantelförmig umgibt und die Glaskapillare bei einer elektrischen Ansteuerung in radialer und/oder longitudinaler Richtung ausdehnt bzw. zusammendrückt, wodurch in der Glaskapillare eine Stoßwelle erzeugt wird, die nach einer Reflexion an der Engstelle der Glaskapillare Mikrotropfen über die Düse aus der Glaskapillare ausstößt.

Nachteilig an den vorstehend beschriebenen bekannten Mikrodispensern ist die Tatsache, dass die Befüllung und der Betrieb der Glaskapillare über einen Schlauch zu Kontaminationen führen kann, da die typischerweise verwendeten Kunststoffschläuche Biofilme ausbilden können. Insbesondere ist die sterile Handhabung der Übergangsstellen zwischen dem Kunststoffschlauch und der Glaskapillare problematisch, da sich dort Ecken und Kanten befinden, in denen sich Kontaminationen (z.B. Biofilme) ablagern können, in denen sich wiederum Bakterien, Viren, Pilze und Hefen einnisten können. Dieses Problem von Kontaminationen beim Befüllen der Glaskapillaren ist insbesondere dann nachteilig, wenn die Mikrodispenser im Bereich der Diagnostik eingesetzt werden, da die Kontaminationen dann zu fehlerbehafteten Produkten und Fehldiagnosen führen können.

Allgemein besteht bei der Handhabung der bekannten Mikrodispenser das Problem, dass die Mikrodispenser Arbeitszyklen unterworfen sind, die aus Aufsaugen (Befüllung), Dispensieren und anschließendem Spülen bestehen. Diese Arbeitszyklen werden mit demselben Mikrodispenser für die nächste Probe bzw. für eine Anzahl von Proben wiederholt und können zu sogenannten Cross-Kontaminationen führen und sind mit einem hohen Zeitaufwand verbunden.

Weiterhin ist zum Stand der Technik zu bemerken, dass beim sogenannten High-Throughput-Screening die zu untersuchenden Substanzen in der Regel in DMSO (Dimethylsulfoxid) gelöst in Mikrotiterplatten aufbewahrt werden, wobei die Mikrotiterplatten mit einer Vielzahl von Proben tiefgekühlt werden. Zur Entnahme einer einzigen Probe muss dann die gesamte Mikrotiterplatte mit allen darin befindlichen Proben aufgetaut werden, wobei Luftfeuchtigkeit in die Proben einkondensieren kann, was zu einer Beeinträchtigung der Proben führt.

Ferner ist aus US 6 101 946 ein Mikrodispenser bekannt, der über die Düse befüllt, gereinigt und entleert wird. Darüber hinaus weist der Mikrodispenser hierbei einen von außen zugänglichen Probenkanal auf und ist deshalb im befüllten Zustand weder lagerungs- noch transportfähig.

Auch aus WO 97/44 134 A1 ist ein Mikrodispenser bekannt, der von vorne über die Düse befüllt wird und deshalb die gleichen Probleme aufweist wie der vorstehend beschriebene bekannte Mikrodispenser, indem der Mikrodispenser im befüllten Zustand weder lagerungs- noch transportfähig ist.

Die Patentanmeldung EP 0 469 444 A1 offenbart zwar eine disposible (Einweg-) Düseneinheit, welche die Analyseflüssigkeit in vorbefüllter Form enthält. Der Ausstoß der Analyseflüssigkeit erfolgt hierbei jedoch entsprechend der Bubble-Jet-Technik, welche die Analyseflüssigkeit aufheizt und deshalb für den erfindungsgemäßen Mikrodispenser nicht geeignet ist, da bei den kleinen Dimensionen des erfindungsgemäßen Mikrodispensers die zur Dampfblasenerzeugung entsprechend dem Bubble-Jet-Verfahren erforderliche Erhitzung die biologischen Proben in der Probenflüssigkeit beschädigen, d.h. denaturieren würde.

Aus US 6 296 811 B1 und US 6 866 825 ist ein Mikrodispenser bekannt, bei dem die Befüllung des Mikrodispensers mit der zu dispensierenden Probenflüssigkeit über Leitungen erfolgt, was mit den eingangs beschriebenen Problemen von Kontaminationen verbunden ist.

Ferner sind aus DE 26 53 051 A1 und DE 101 06 362 A1 Pipetten zur Blutentnahme bekannt, die auch eine Lagerung ermöglichen. Allerdings handelt es sich hierbei nicht um Mikrodispenser in dem erfindungsgemäßen Sinne. Das gleiche gilt für die aus WO02/42175 A1 und US 6 457 612 bekannten vorbefüllten Pipetten.

Weiterhin offenbart US 6 232 129 B1 eine herkömmliche piezoelektrische Pipettierungseinrichtung zur Überführung von Probentropfen zwischen zwei Behältern. Diese Pipettierungseinrichtung ermöglicht jedoch keine dauerhafte Lagerung im befüllten Zustand.

Ferner sind aus US 4 528 579, US 4 418 354 und US 4 528 578 Mikrodispenser für Tintenstrahldrucker bekannt, die sich als solche nicht zum Dispensieren biologischer Proben eignen.

Weiterhin ist aus WO 2004/099059 A1 ein Mikrodispenser bekannt, der jedoch nach einem Dispensiervorgang nicht wieder eingelagert werden kann.

Darüber hinaus ist zum Stand der Technik noch hinzuweisen auf US 4 162 030 und US 6 401 769.

US4162030 offenbart einen Einwegdispenser mit einer flexiblen vorbefüllten Tasche oder Packung zur sterilen Aufbewahrung eines Produkts im Ernährungs - oder medizinischen Bereich, wobei der Dispensiervorgang durch Druch erfolgt.

Aus US6401769 ist ein Mikrodispenser für biochemische Reagenzien bekannt, dessen Dispensierhopf direkt mit einem Rerservoir verbunden ist, in dem die Flüssigkeit durch Kapillarkräfte gehalten wird, wobei der Mikrodispenser demontierbar an eine Vorrichtung zur Erzeugung von Gaspulsen gekoppelt ist und der Dispensiervorgand durch Überwindung der Kapillarkräfte mittels eines Gaspulses erfolgt.

Aus EP 0 900 594 A2 ist ferner eine Bürette bekannt, die zur quantitativen Zumessung kleiner Flüssigkeitsmengen in Laboren dient. Hierbei handelt es sich jedoch nicht um einen gattungsgemäßen Mikrodispenser, der einzelne Mikrotropfen abgibt.

Ferner offenbart US 6 343 717 B1 verschiedene Pipettentypen, die jedoch ebenfalls gattungsfremd sind.

Schließlich ist zum Stand der Technik noch hinzuweisen auf US 6 092 695, WO 03/054518 A1 und GB 2 216 259 A.

US6092 695 beschreibt eine Patronenpumpe mit einer flexiblen Messkammer, die an einer Vorratstasche hängt, und aus der ein Reagenz durch Druch automatisiert abgegeben wird.

Aus der WO 03/054518 A1 sind ein Mikroextraktions- und Mikrodispensiergerät bekannt, die entweder miteinander koppelbar oder integriert sind, wobei der Mikroextraktor zur Festphasenextraktion dient, und die Dispensiervorgänge piezoelektrisch oder durch Elektrospray - Düsen erfolgen.

Die GB 2216 259 beschreibt einen Dispenser mit einem optisch lesbaren Code für die nasschemische Analyse, der in das Zylindergehäuse eines Analysators eingesetzt werden kann.

Der Erfindung liegt deshalb die Aufgabe zugrunde, die bekannten Mikrodispenser so zu verbessern, dass möglichst keine Kontaminationen oder Verunreinigungen auftreten.

Die Aufgabe wird durch einen erfindungsgemäßen Mikrodispenser und ein zugehöriges Betriebsverfahren gemäß den nebengeordneten Ansprüchen gelöst.

Die Erfindung umfasst die allgemeine technische Lehre, einen Mikrodispenser nicht nur zum Dispensieren einzusetzen, sondern auch zur Lagerung und zum Transport der zu dispensierenden Probe, so dass auf eine Befüllung des Mikrodispensers zu Beginn eines Dispensiervorgangs verzichtet werden kann, wodurch die beim Stand der Technik auftretenden Kontaminationsprobleme umgangen werden. Weiterhin werden keine zeitaufwändigen Spülvorgänge durchgeführt.

Der erfindungsgemäße Mikrodispenser ist deshalb mit dem befüllten Probenbehälter unabhängig und fluidisch getrennt von dem eigentlichen Dispensiergerät lagerungs- und/oder transportfähig, ohne dass die Probenflüssigkeit während der Lagerung bzw. während des Transports aus dem Probenbehälter entweicht. Die eingangs beschriebenen bekannten Mikrodispenser sind hierzu nicht geeignet, wie im Folgenden ausgeführt wird. Bei den bekannten Mikrodispensern mit einer Schlauchzuleitung zur Befüllung des Probenbehälters.könnte die Probenflüssigkeit nämlich während der Lagerung bzw. während des Transports über die Schlauchzuleitung austreten. Bei den ebenfalls bekannten Mikrodispensern, bei denen die Befüllung von vorne über die Düse erfolgt, wäre das Befüllen über die Düsen und das anschließende Verschließen der Düsen dagegen sehr zeitaufwändig.

Der erfindungsgemäße Mikrodispenser zeichnet sich vorzugsweise auch dadurch aus, dass die Befüllung des Probenbehälters mit der Probenflüssigkeit zeitlich getrennt von dem Dispensiervorgang erfolgt, wohingegen die Befüllung bei den bekannten Mikrodispensern mit einer Schlauchzuleitung unmittelbar vor oder während des Dispensierens erfolgt. In der Praxis wird der Probenbehälter des erfindungsgemäßen Mikrodispensers nämlich in der Regel zeitlich vor dem Dispensieren befüllt, wohingegen während des anschließenden Dispensiervorgangs kein Nachfüllen vorgesehen ist.

In einer Variante der Erfindung ist der Mikrodispenser für eine Einwegnutzung ausgelegt, wobei der Probenbehälter (z.B. eine Glaskapillare) nicht wieder befüllbar ist. In dieser Variante wird der Einweg-Mikrodispenser also werksseitig mit der gewünschten Probenflüssigkeit befüllt und anschließend im befüllten Zustand gelagert und ausgeliefert, d.h. zum Kunden transportiert, wobei keine Probenflüssigkeit aus dem Mikrodispenser austreten kann. Auf diese Weise werden Kontaminationen der in dem Mikrodispenser befindlichen Probenflüssigkeit vollständig verhindert, da die Probenflüssigkeit in dem Mikrodispenser steril eingeschlossen ist. Vorzugsweise ist der Probenbehälter deshalb bis auf die Düse vollständig geschlossen und weist abgesehen von der Düse, die während der Lagerung oder des Transports geschlossen ist, keine sonstige Öffnung auf, über die während der Lagerung oder des Transports Probenflüssigkeit austreten könnte.

In einer anderen Variante der Erfindung weist der Mikrodispenser dagegen ein Ventil zur Belüftung des Probenbehälters beim Dispensieren und/oder zum Befüllen des Probenbehälters auf, was eine Mehrwegnutzung des erfindungsgemäßen Mikrodispensers erlaubt. Beispielsweise kann der Mikrodispenser werksseitig über das Ventil mit der gewünschten Probenflüssigkeit gefüllt werden, woraufhin das Ventil dann während der Lagerung und des Transports geschlossen wird. Zum eigentlichen Dispensieren wird das Ventil dann zur Belüftung des Probenbehälters geöffnet, damit die Probenabgabe nicht durch die Ausbildung eines übermäßigen Vakuums in dem Probenbehälter behindert wird. Das Ventil ist hierbei vorzugsweise baulich in den Mikrodispenser integriert und bildet eine Einheit mit dem Mikrodispenser, wodurch sich der erfindungsgemäße Dispenser von den eingangs beschriebenen bekannten Mikrodispensern unterscheidet, bei denen eine Zuleitung mit einer separaten Druckregelung verbunden ist.

Unter Einwegnutzung wird im Rahmen der Erfindung verstanden, dass der Mikrodispenser einmalig, d.h. in der Regel werksseitig, mit der Probensubstanz befüllt wird. Nachdem diese Befüllung dispensiert wurde, wird der Dispenser verworfen. Eine Mehrwegbenutzung in dem hier verwendeten Sprachgebrauch bedeutet, dass der Mikrodispenser einmal oder mehrfach in das Dispensiergerät eingesetzt werden kann. Zwischen den einzelnen Dispensiervorgängen wird der Mikrodispenser mit der enthaltenen Probe gelagert.

Vorzugsweise weist der erfindungsgemäße Mikrodispenser eine Markierung auf, die Informationen über den Mikrodispenser und/oder die in dem Probenbehälter befindliche Probe enthält. Dies ist insbesondere dann sinnvoll, wenn der Mikrodispenser werksseitig befüllt und anschließend im gefüllten Zustand ausgeliefert wird, da der Endnutzer dann anhand der Markierung die in dem Probenbehälter befindliche Probe identifizieren kann, wodurch Fehlanwendungen vermieden werden.

Die Markierung zur Identifizierung des Mikrodispensers bzw. der Probe kann beispielsweise aus einem optischen Code bestehen, wie beispielsweise einem eindimensionalen oder zweidi-mensionalen Strichcode, der optisch ausgelesen wird. Es ist jedoch alternativ auch möglich, dass der erfindungsgemäße Mikrodispenser einen integrierten Transponder aufweist, der drahtlos ausgelesen werden kann, was einen hohen Automatisierungsgrad ermöglicht.

In einer besonderen Ausführungsform des erfindungsgemäßen Mikrodispensers ist dieser mit einem Transponder ausgestattet, der sowohl einen "Nur lese"-Bereich als auch einen "Lese und schreib"-Bereich aufweist. In dieses Ausführungsform ist beispielsweise die Probennachverfolgung besonders vorteilhaft gelöst, da jeder Lagerungsvorgang und jeder Dispensiervorgang beispielsweise mit Datumsstempel, Anzahl der dispensierten Tropfen oder Batch-Nummer des hergestellten Arrays direkt auf dem Mikrodispenser selber gespeichert wird.

Bei dem erfindungsgemäßen Mikrodispenser kann beispielsweise durch einen in dem Probenbehälter befindlichen Schwamm verhindert werden, dass die Probenflüssigkeit über die Düse aus dem Probenbehälter austritt, indem der Schwamm auf die Probenflüssigkeit eine Kapillarkraft ausübt, die in dem Probenbehälter einen Halteunterdruck erzeugt. Der Halteunterdruck kann bei dem erfindungsgemäßen Mikrodispenser zwischen 1 mbar und 100 mbar liegen, jedoch ist die Erfindung hinsichtlich des Halteunterdrucks nicht auf diesen Wertebereich beschränkt.

Es ist jedoch alternativ auch möglich, dass die Düse zum Transport und/oder zur Lagerung durch einen Stopfen, eine Folie, durch Wachs oder durch eine Verschlusskappe verschlossen ist.

Vorzugsweise weist der Probenbehälter (z.B. eine Glaskapillare) bei dem erfindungsgemäßen Mikrodispenser einen Querschnittssprung auf, an dem Stoßwellen reflektiert werden, die durch einen Aktor (z.B. einen herkömmlichen Piezoaktor) erzeugt werden. In einer Variante der Erfindung besteht der Querschnittssprung aus einer Querschnittsverengung, wie sie aus dem Stand der Technik bekannt ist. In einer anderen Variante der Erfindung besteht der Querschnittssprung dagegen aus einer Querschnittserweiterung, was ebenfalls zu einer Reflexion von Stoßwellen im Bereich des Querschnittssprungs führt. Hinsichtlich der konstruktiven Auslegung des Querschnittssprungs zur Erreichung der gewünschten Reflexionswirkung wird auf Wolfgang Wehl: "Akustik und Fluidmechanik in Kanälen und Düsen von Tintenschreibwerken", Dissertation TU München, 2. Auflage 2002 verwiesen, deren Inhalt der vorliegenden Beschreibung in vollem Umfang zuzurechnen, so dass an dieser Stelle auf eine detaillierte Beschreibung der konstruktiven Gestaltung des Querschnittssprungs verzichtet werden kann.

Der Probenbehälter und/oder die Düse können bei dem erfindungsgemäßen Mikrodispenser beispielsweise aus Kunststoff, Glas oder Keramik bestehen, jedoch ist die Erfindung hinsichtlich der Materialien für den Probenbehälter bzw. die Düse nicht auf die vorstehend genannten Materialien beschränkt, sondern grundsätzlich auch mit anderen Materialien realisierbar.

Vorzugsweise bestehen der Probenbehälter und/oder die Düse bei dem erfindungsgemäßem Mikrodispenser jedoch aus einem inerten Material, wie beispielsweise Glas.

Darüber hinaus weist der erfindungsgemäße Mikrodispenser vorzugsweise einen Aktor zum Ausstoßen der in dem Probenbehälter befindlichen Probe auf, wobei der Aktor vorzugsweise baulich in den Mikrodispenser integriert ist.

Es ist jedoch alternativ auch möglich, dass der Aktor von dem Mikrodispenser baulich getrennt ist und erst zum Dispensieren mit dem Aktor zusammen gebracht wird. Die Lagerung und der Transport des erfindungsgemäßen Mikrodispensers kann dann ohne den Aktor erfolgen.

Beispielsweise kann der Aktor stoffschlüssig, reibschlüssig und/oder formschlüssig mit dem Probenbehälter verbunden sein.

Vorzugsweise umgibt der Aktor den Probenbehälter hülsenförmig, wie es an sich aus dem Stand der Technik bekannt ist. Hierbei kann der hülsenförmige Aktor auf den Probenbehälter aufgesteckt werden, wobei der Aktor im aufgesteckten Zustand durch eine Montagehülse fixiert werden kann. Die Montagehülse kann beispielsweise durch eine Verschraubung oder einen Sicherungsring auf dem Probenbehälter fixiert werden. Darüber hinaus ist es vorteilhaft, wenn die Montagehülse einen axial verlaufenden Federschlitz aufweist, so dass sich die Montagehülse in radialer Richtung leicht aufdehnen kann.

Weiterhin ist es vorteilhaft, wenn die Düse und/oder der Probenbehälter mit einer Beschichtung versehen ist, die Protein-immobilisierend oder DNA-immobilisierend wirkt. Derartige Beschichtungen sind beispielsweise in EP 0 880 535 B1, DE 44 470 15 A1, US 6 852 851, US 5 650 506, US 5 705 628, US 5 898 071, US 5 447 864, WO 97/21090 beschrieben, so dass der Inhalt dieser Veröffentlichungen der vorliegenden Beschreibung hinsichtlich des Aufbaus und der Zusammensetzung der immobilisierenden Beschichtung in vollem Umfang zuzurechnen ist.

Weiterhin ist es vorteilhaft, wenn die Düse und/oder der Probenbehälter mit einer Beschichtung versehen ist, die eine spezifische Adsorption von Biomolekülen zulässt, eine Koagulation einer in den Mikrodispenser eingefüllten Probe verhindert, und/oder für eine Aufreinigung und/oder Aufkonzentration der Probe geeignet ist. Geeignete Substanzen für derartige Beschichtungen sind von Standardverfahren der Biotechnologie und Biochemie an sich bekannt.

Weiterhin ist zu erwähnen, dass der Probenbehälter vorzugsweise ein Volumen im Bereich von 1 nl bis 1 ml aufweist, während die Düse vorzugsweise einen Düsendurchmesser im Bereich von 10 µm bis 100 µm hat. Die Erfindung ist jedoch hinsichtlich des Volumens des Probenbehälters und des Düsendurchmessers nicht auf die vorstehend genannten Wertebereiche beschränkt, sondern grundsätzlich auch mit anderen Werten realisierbar.

Ferner weist der Probenbehälter vorzugsweise sowohl ein Probenreservoir als auch einen Arbeitsraum auf. Der Arbeitsraum dient hierbei zum Ausstoßen einer einzelnen Probe aus dem Mikrodispenser. Hierzu kann der Arbeitsraum beispielsweise mittels eines Piezoaktors radial und/oder longitudinal zusammengedrückt werden, was an sich bekannt ist. Das Probenreservoir dient dagegen zur Aufnahme einer ausreichenden Probenmenge, um ohne eine kontaminationsträchtige Wiederbefüllung des Mikrodispensers nacheinander mehrere Proben abgeben zu können. Das Probenreservoir weist deshalb vorzugsweise ein größeres Volumen auf als der Arbeitsraum des Probenbehälters.

In einer Variante der Erfindung besteht die Düse lediglich aus einer entsprechend geformten Düsenöffnung des Probenbehälters. Es besteht jedoch alternativ auch die Möglichkeit, dass die Düse durch eine separate Düsenfolie, eine Düsenkappe oder einen Düsenstopfen gebildet wird, die eine Öffnung in dem Probenbehälter verschließen.

Ferner besteht im Rahmen der Erfindung auch die Möglichkeit, dass das Probenreservoir aufgrund des verwendeten Materials oder konstruktionsbedingt eine Volumenänderung zulässt. Breispielsweise kann das Probenreservoir eine nachgiebige und vorzugsweise elastische Wandung aufweisen, so dass sich das Volumen des Probenreservoirs verringern lässt, indem man den Probenbehälter im Bereich des Probenreservoirs zusammendrückt.

Das Probenreservoir kann beispielsweise auch durch eine elastische Membran oder einen flexiblen Schlauch gebildet werden. Die Volumenänderung kann hierbei beispielsweise erfolgen, indem von außen ein fluidischer Druck auf die Membran bzw. den Schlauch aufgebracht wird. Alternativ besteht die Möglichkeit, dass das Volumen des Probenreservoirs dadurch verändert wird, dass ein Stempel gegen die Membran bzw. auf den Schlauch drückt. Bei einem Schlauch besteht eine weitere Möglichkeit zur Verringerung des Volumens darin, den Schlauch aufzurollen oder zu falten.

Ferner besteht die Möglichkeit, dass das Probenreservoir aus einem Rohr besteht, in dem ein Stempel verschiebbar ist, so dass die Stellung des Stempels in dem Rohr das Volumen des Probenreservoirs bestimmt. Der Stempel kann hierbei integraler Bestandteil des Probenbehälters sein oder durch Aufbringen einer äußeren Kraft (z.B. Druck, Hebel) bewegt werden.

Weiterhin ist zu erwähnen, dass das Probenreservoir vorzugsweise eine nachgiebige Wandung aufweist, damit sich das Volumen des Probenreservoirs bei einer Probenabgabe entsprechend dem abgegebenen Probenvolumen anpassen kann.

Weiterhin ist die Erfindung nicht auf den vorstehend beschriebenen erfindungsgemäßen Mikrodispenser als einzelnes Teil beschränkt, sondern umfasst auch ein komplettes Dispensiergerät mit mindestens einem erfindungsgemäßen Mikrodispenser. Hierbei kann sich das Dispensiergerät dadurch auszeichnen, dass keine Probenzuleitung für den Mikrodispenser vorgesehen ist, so dass der Mikrodispenser fluidisch von dem Dispensiergerät getrennt ist. Das Dispensiergerät bewirkt in diesem Fall lediglich die Ansteuerung des zugehörigen Aktors zur Tropfenabgabe und unter Umständen auch die räumliche Positionierung und Ausrichtung des Mikrodispensers.

Besonders vorteilhaft ist der erfindungsgemäße Mikrodispenser bei der Herstellung von sogenannten Arbeitskopien für Screeningprozess beispielsweise in der pharmazeutischen Industrie. Hierbei handelt es sich beispielsweise um die Herstellung von sogenannten Mikroarrays oder auch die Herstellung von multiplen Assays. In den Arbeitsverfahren des Standes der Technik werden von den Substanzen, die sich im allgemeinen in Mikrotiterplatten oder anderen Behältnissen befinden, Aliquote abgenommen und in Mikrotiterplatten verteilt. Von diesen sogenannten Großmutterplatten werden durch einen zweimaligen Aliquotierungs- und Vervielfältigungsschritt erst Mutter- und anschließend Tochterplatten (Kopien) hergestellt. Hierzu müssen die mit den Probensubstanzen gefüllten und tiefgekühlt gelagerten Mikrotiterplatten zunächst aufgetaut werden, um eine Entnahme der flüssigen Probensubstanzen zu ermöglichen. Bei diesem Auftauen kann Luftfeuchtigkeit in die Probensubstanzen einkondensieren, was zu einer Beeinträchtigung der Probensubstanzen führt, was bereits eingangs erwähnt wurde. Nach dem Auftauen werden die Probensubstanzen dann aus der jeweiligen Mutterplatte entnommen und in eine sogenannte Tochterplatte überführt. In der gleichen Weise wird dann von der Tochterplatte eine weitere Kopie erstellt, die als Screening-Platte oder als Mikroarray bezeichnet wird. Dieser Arbeitsablauf, der dem Stand der Technik entspricht, ist aufwändig, kompliziert und besteht aus vielen Einzelschritten, bei denen es zu Kontaminationen, Kreuzkontaminationen, Verschleppungen, Verdünnungsfehlern oder zu Verdünnung durch kondensierendes Wasser kommen kann. Auch kann eine einzelne Probe nur entnommen werden indem die gesamte Mikrotiterplatte bearbeitet wird. Im Gegensatz dazu eignet sich der erfindungsgemäße Mikrodispenser besonders gut zur Herstellung von Arbeitskopien im Screeningprozess in Form von Mikroarrays, multiplen Assays oder zur Herstellung von so genannte Diagnostik-Chips. Herbei wird die Probensubstanz direkt aus der Großmutterplatte in den Mikrodispenser gefüllt und zur Herstellung beispielsweise der Arrays verwendet. Die sonst notwendige Herstellung von Mutter- und Tochterplatten entfällt. Es können einzelne Proben dispensiert werden, ohne dass eine ganze Mikrotiterplatte aufgetaut werden muss.

Ferner ist zu erwähnen, dass die Erfindung nicht auf den eingangs beschriebenen Mikrodispenser und ein entsprechendes Dispensiergerät beschränkt ist, sondern auch ein entsprechendes Betriebsverfahren umfasst, wie sich bereits aus der vorstehenden Beschreibung ergibt.

Die Handhabung des erfindungsgemäßen Mikrodispensers kann in herkömmlicher Weise manuell durch eine Bedienungsperson erfolgen.

Es ist jedoch alternativ auch möglich, dass die Handhabung des erfindungsgemäßen Mikrodispensers durch einen Roboter erfolgt. Der erfindungsgemäße Mikrodispenser ist deshalb hinsichtlich seiner Abmessungen und Formgestaltung vorzugsweise kompatibel zu herkömmlichen Robotern für die Handhabung von Mikrodispensers, so dass der erfindungsgemäße Mikrodispenser auch von herkömmlichen Robotern gehandhabt werden kann, ohne dass bauliche Anpassungen an den Robotern erforderlich sind.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine Querschnittsansicht eines erfindungsge- mäßen Mikrodispensers zur Einwegnutzung,
- Figur 2: eine Querschnittszeichnung eines alternativen Ausführungsbeispiels eines erfindungsgemäßen Mikrodispensers zur Mehrfachnutzung mit einem Ventil zur Belüftung und Befüllung des Mikro- dispensers,
- Figur 3: eine Querschnittsansicht eines weiteren Aus- führungsbeispiels eines erfindungsgemäßen Mikrodispensers mit einer Querschnittserwei- terung zur Reflexion von Stoßwellen in dem Probenbehälter,
- Figuren 4a, 4b: verschiedene Ausführungsbeispiele des Ventils für den Mikrodispenser gemäß Figur 2,
- Figur 5: eine Querschnittsansicht eines Stopfens zum Verschließen des erfindungsgemäßen Mikrodis- pensers bei Transport und Lagerung,
- Figur 6: eine Querschnittsansicht eines weiteren Aus- führungsbeispiels eines erfindungsgemäßen Mikrodispensers ohne ein Ventil, jedoch mit einer Querschnittserweiterung,
- Figuren 7a, 7b: eine Querschnittsansicht bzw. eine Seitenan- sicht eines weiteren Ausführungsbeispiels ei- nes erfindungsgemäßen Mikrodispensers mit ei- nem vergrößerten Probenreservoir,
- Figuren 8a-8c: verschiedene Ansichten eines weiteren Ausfüh- rungsbeispiels eines erfindungsgemäßen Mikro- dispensers mit einer Düsenkappe, welche die Düse bildet,
- Figuren 9a-9c: verschiedene Ansichten eines weiteren Ausfüh- rungsbeispiels eines erfindungsgemäßen Mikro- dispensers mit einer aufgeklebten Düsenfolie, welche die Düse bildet,
- Figuren 10a-10e: verschiedene Ansichten eines weiteren Ausfüh- rungsbeispiels eines erfindungsgemäßen Mikro- dispensers mit einer aufgeklebten Verschluss- folie, welche die Düse während der Lagerung und des Transports verschließt, sowie
- Figuren 11a-11c: verschiedene Ansichten eines weiteren Ausfüh- rungsbeispiels eines erfindungsgemäßen Mikro- dispensers mit einem aufgesteckten Piezoak- tor, der durch eine Montagehülse und einen Sicherungsring gesichert ist.

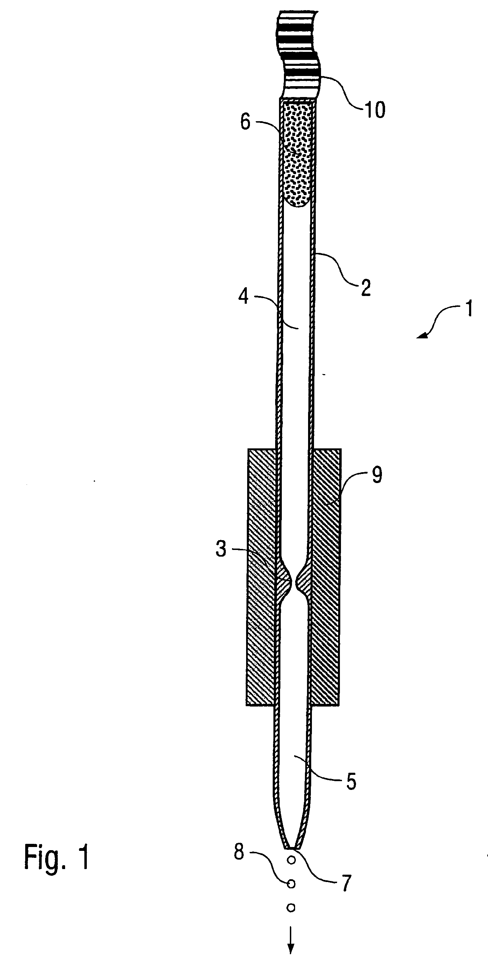

Die Querschnittsansicht in Figur 1 zeigt einen erfindungsgemäßen Mikrodispenser 1, der in ein Dispensiergerät (nicht dargestellt) eingesetzt werden kann, um Mikrotropfen abzugeben.

Zur Aufnahme einer Probenflüssigkeit weist der Mikrodispenser 1 einen Probenbehälter 2 in Form einer Glaskapillare mit einem Volumen von 20 µl auf, wobei der Probenbehälter 2 eine Engstelle 3 aufweist, die den Probenbehälter 2 in ein Probenreservoir 4 und einen Arbeitsraum 5 trennt.

In dem Probenreservoir 4 ist ein Schwamm 6 angeordnet, der auf die Probenflüssigkeit Kapillarkräfte ausübt, die in dem Probenreservoir 4 einen Halteunterdruck erzeugen, wodurch verhindert wird, dass die Probenflüssigkeit aus dem Probenbehälter 2 ausläuft.

Darüber hinaus weist der Probenbehälter 2 eine Düse 7 mit einem Düsendurchmesser von 70 µm auf, über die Mikrotropfen 8 abgegeben werden können.

Die Abgabe der Mikrotropfen 8 wird durch einen Piezoaktor 9 bewirkt, der den Probenbehälter 2 im Bereich der Engstelle 3 mantelförmig umgibt und den Probenbehälter 2 bei einer elektrischen Ansteuerung in radialer und/oder longitudinaler Richtung ausdehnt bzw. zusammendrückt. Dadurch wird in der in dem Probenbehälter 2 befindlichen Probenflüssigkeit eine Stoßwelle erzeugt, die an der Engstelle 3 reflektiert wird und zum Ausstoßen der Mikrotropfen 8 aus der Düse 7 führt.

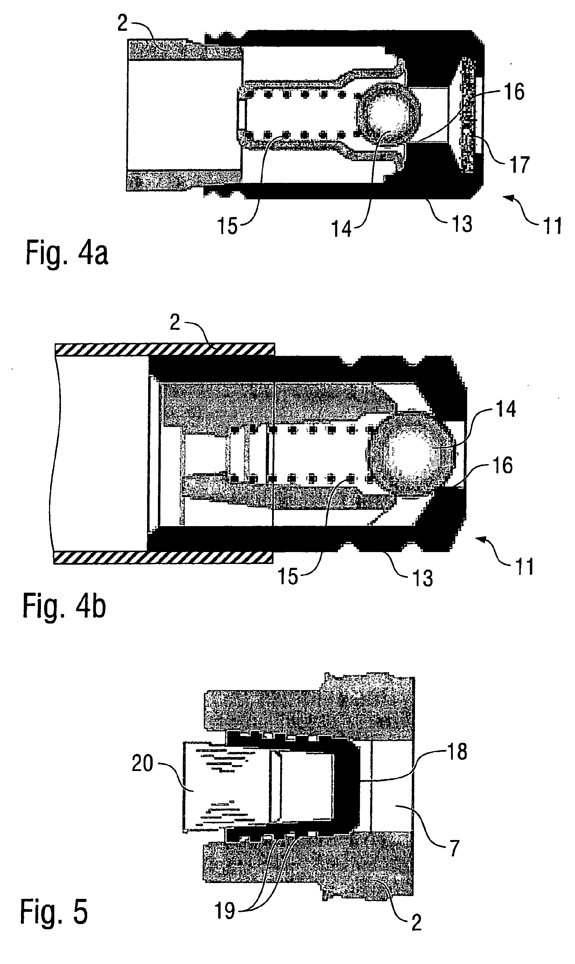

Von besonderer Bedeutung an diesem Ausführungsbeispiel ist die Tatsache, der Probenbehälter 2 bis auf die Düse 7 vollständig geschlossen und nicht wieder befüllbar ist, so dass der Mikrodispenser 1 für eine Einwegnutzung ausgelegt ist. Der Mikrodispenser 1 wird also werksseitig mit einer vorgegebenen Probenflüssigkeit befüllt und anschließend im befüllten Zustand ausgeliefert, so dass Kontaminationen durch Wiederbefüllungen vollständig augeschlossen sind. Während der Lagerung und des Transports wird die Düse 7 zusätzlich verschlossen, beispielsweise durch einen Stopfen, eine Folie oder durch Wachs, um den Probenbehälter 2 hermetisch zu verschließen. Ein exemplarisches Ausführungsbeispiel eines Stopfens zum Verschließen der Düse 7 ist in Figur 5 dargestellt und wird später noch detailliert beschrieben.

Darüber hinaus weist der Mikrodispenser 1 einen Strichcode 10 auf, der Informationen über den Mikrodispenser 1 (z.B. Düsendurchmesser, Behältervolumen) und die in dem Probenbehälter 2 befindliche Probenflüssigkeit in codierter Form enthält.

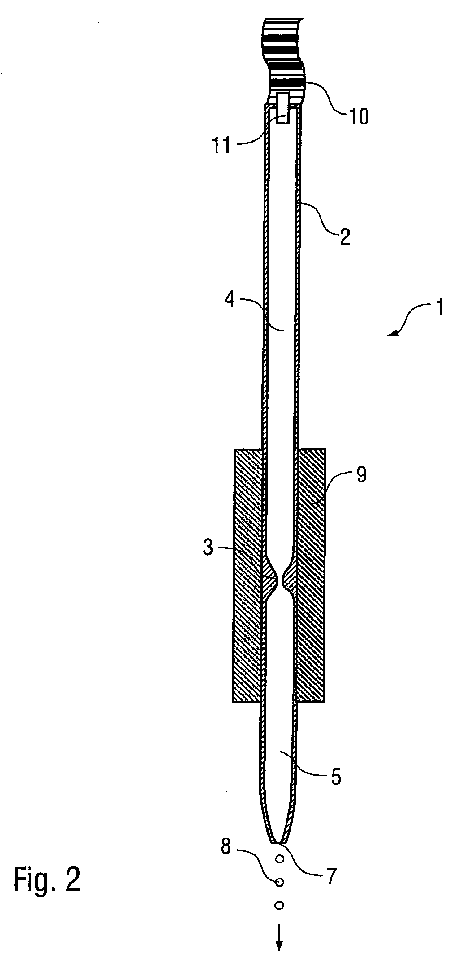

Das in Figur 2 dargestellte alternative Ausführungsbeispiel stimmt weitgehend mit dem vorstehend beschriebenen und in Figur 1 dargestellten Ausführungsbeispiel überein, so dass zur Vermeidung von Wiederholungen weitgehend auf die vorstehende Beschreibung verwiesen wird, wobei für entsprechende Bauteile bzw. Elemente dieselben Bezugszeichen verwendet werden.

Eine Besonderheit dieses Ausführungsbeispiels besteht darin, dass der Probenbehälter 2 nicht hermetisch abgeschlossen ist, sondern ein Ventil 11 aufweist. Das Ventil 11 ermöglicht zum einen eine Belüftung des Probenbehälters 2 während des Dispensierens, damit die Abgabe der Mikrotropfen 8 nicht durch den Aufbau eines Vakuums in dem Probenbehälter 2 behindert wird. Darüber hinaus ermöglicht das Ventil 11 eine Wiederbefüllung des Probenbehälters 2, was eine Mehrwegnutzung des Mikrodispensers 1 erlaubt. Das Ventil 11 ist jedoch baulich in den Mikrodispenser integriert und verschließbar, damit während des Transports und der Lagerung des Mikrodispensers 1 keine Probenflüssigkeit aus dem gefüllten Probenbehälter 2 entweichen kann. In den Figuren 4a und 4b sind verschiedene Ausführungsbeispiele des Ventils 11 dargestellt, die später noch detailliert beschrieben werden.

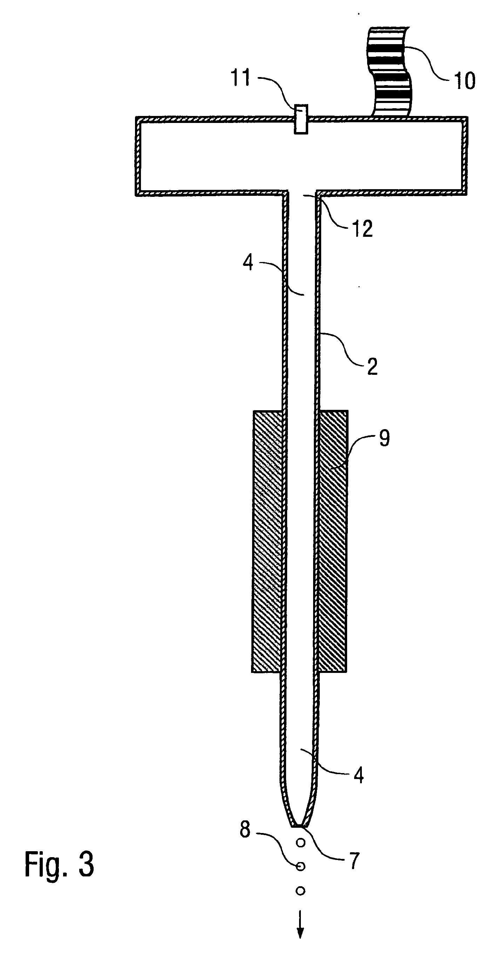

Figur 3 zeigt ein weiteres Ausführungsbeispiel eines erfindungsgemäßen Mikrodispensers 1, das wiederum weitgehend mit den vorstehend beschriebenen Ausführungsbeispielen übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass der Probenbehälter 2 anstelle der Engstelle 3 eine Querschnittserweiterung 12 aufweist, an der ebenfalls eine Reflexion von Stoßwellen erfolgt, wie in der bereits eingangs genannten Dissertation von Wolfgang Wehl: ,,Akustik und Fluidmechanik in Kanälen und Düsen von Tintenschreibwerken" erläutert wird.

Figur 4a zeigt eine Querschnittsansicht eines Ausführungsbeispiels des Ventils 11 mit einem aus Kunststoff bestehenden Ventilgehäuse 13, das auf den Probenbehälter 2 aufgeschrumpft wird und dann fest und gasdicht mit dem Probenbehälter 2 verbunden ist. Hierzu wird das mit leichtem Untermaß gefertigte Ventilgehäuse 13 erwärmt und dann im erwärmten und dadurch erweiterten Zustand auf den Probenbehälter 2 aufgeschoben. Bei der anschließend Abkühlung auf die Umgebungstemperatur zieht sich das Ventilgehäuse 13 dann wieder zusammen, was zu einem festen Sitz des Ventilgehäuses 13 auf dem Probenbehälter 2 führt.

Es ist jedoch alternativ auch möglich, dass das Ventilgehäuse 13 durch eine Klebverbindung mit dem Probenbehälter 2 verbunden ist.

In dem Ventilgehäuse 13 wird eine Ventilkugel 14 von einer Spiralfeder 15 gegen einen Ventilsitz 16 gepresst. Das Ventil 11 öffnet also nur in einer Richtung, wenn der von außen wirkende Differenzdruck hinreichend groß ist, um die Ventilkugel 14 gegen die Kraft der Spiralfeder 15 aus dem Ventilsitz 16 zu heben. Die Vorspannung und die Federsteifigkeit der Spiralfeder 15 sind hierbei so gewählt, dass das Ventil 11 bei einer Ansteuerung des Piezoaktors 9 und zunehmender Entleerung des Probenbehälters 2 langsam öffnet, um den Probenbehälter 2 zu belüften.

Darüber hinaus weist das Ventil 11 in diesem Ausführungsbeispiel noch ein Sieb 17 (oder eine Membran) auf, das bei einer Befüllung des Probenbehälters 2 das Eindringen von Fremdkörpern in den Probenbehälter 2 verhindert.

Figur 4b zeigt ein alternatives Ausführungsbeispiel des Ventils 11, das weitgehend mit dem vorstehend beschriebenen Ausführungsbeispiel übereinstimmt, so dass zur Vermeidung von Wiederholungen weitgehend auf die vorstehende Beschreibung zu Figur 4a verwiesen wird, wobei für entsprechende Bauteile dieselben Bezugszeichen verwendet werden.

Eine Besonderheit dieses Ausführungsbeispiels besteht darin, dass der Probenbehälter 2 bei der Montage auf das Ventilgehäuse 13 aufgeschrumpft wird..Hierzu wird der mit leichtem Untermaß gefertigte Probenbehälter 2 erwärmt und dann im erwärmten und dadurch erweiterten Zustand auf das Ventilgehäuse 13 aufgeschoben. Bei der anschließend Abkühlung auf die Umgebungstemperatur zieht sich der Probenbehälter 2 dann wieder zusammen, was zu einem festen Sitz des Probenbehälters 2 auf dem Ventilgehäuse 13 führt.

Schließlich zeigt Figur 5 eine Querschnittsansicht eines Stopfens 18, der in die Düse 7 des Probenbehälters 2 eingepresst werden kann, um zu verhindern, dass während der Lagerung oder des Transports Probenflüssigkeit aus dem Probenbehälter 2 austritt. Der Stopfen 18 besteht aus Kunststoff und ist leicht konisch zulaufend, was das Einführen des Stopfens 18 in die Düse 7 erleichtert. An seiner konischen Mantelfläche weist der Stopfens 18 mehrere ringförmig umlaufende Dichtrippen 19 auf, wodurch die Flächenpressung zwischen dem Stopfen 18 und der Innenseite der Düse 7 erhöht und damit die Dichtwirkung verbessert wird.

Darüber hinaus ist der Stopfen 18 topfförmig gestaltet und nach außen offen, so dass der Stopfen 18 mittels eines Stempels 20 in die Düse 7 hinein gepresst werden kann.

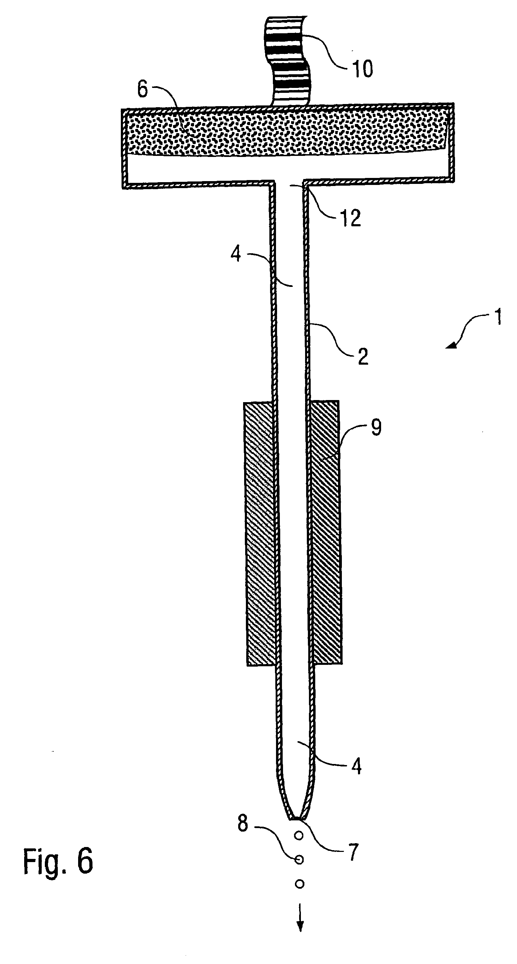

Das in Figur 6 dargestellte alternative Ausführungsbeispiel stimmt weitgehend mit den vorstehend beschriebenen Ausführungsbeispielen gemäß Figur 1 und Figur 3 überein, so dass zur Vermeidung von Wiederholungen weitgehend auf die vorstehende Beschreibung verwiesen wird, wobei für entsprechende Bauteile bzw. Elemente dieselben Bezugszeichen verwendet werden.

Dieses Ausführungsbeispiel kombiniert die geschlossene Bauform bei dem Ausführungsbeispiel gemäß Figur 1 mit der Querschnittserweiterung bei dem Ausführungsbeispiel gemäß Figur 3.

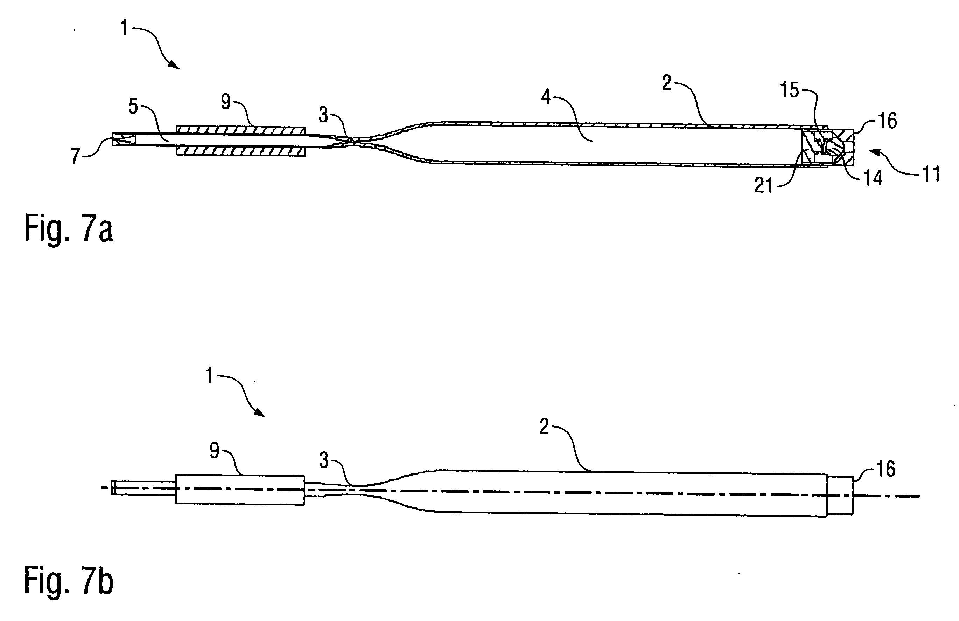

Die Figuren 7a und 7b zeigen ein weiteres Ausführungsbeispiel eines erfindungsgemäßen Mikrodispensers 1, das wiederum weitgehend mit den vorstehend beschriebenen Ausführungsbeispielen übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass das Probenreservoir 4 einen deutlich größeren Durchmesser aufweist als der Arbeitsraum 5 des Probenbehälters 2. Dementsprechend hat das Probenreservoir auch ein größere Volumen als der Arbeitsraum 5. Dies bietet den Vorteil, dass der Mikrodispenser 1 nacheinander eine Vielzahl von mehr als einer Million Mikrotropfen 8 abgeben kann, ohne dass eine zwischenzeitliche Wiederbefüllung des Mikrodispensers erforderlich ist.

Eine weitere Besonderheit dieses Ausführungsbeispiels besteht darin, dass die Düse 7 durch einen Düsenstopfen gebildet wird, der in eine entsprechende Öffnung in dem Arbeitsraum 5 eingepresst ist. Die Düsengeometrie wird hierbei also nicht durch die Form der Öffnung in dem Arbeitsraum 5 bestimmt, was bei der Gestaltung der Düsengeometrie einen größeren konstruktiven Gestaltungsspielraum eröffnet.

Ferner weist der Mikrodispenser 1 in diesem Ausführungsbeispiel noch eine besondere Bauweise des Ventils 11 mit der Ventilkugel 14, dem Ventilsitz 16 und einem Stopfen 21 auf, wobei sich die Spiralfeder 15 innen an dem Stopfen 21 abstützt und die Spiralfeder 15 in den Ventilsitz 16 drückt.

Darüber hinaus ist der Piezoaktor 9 in diesem Ausführungsbeispiel vollständig im Bereich des Arbeitsraums 5 angeordnet, d.h. auf der Düsenseite der Engstelle 3.

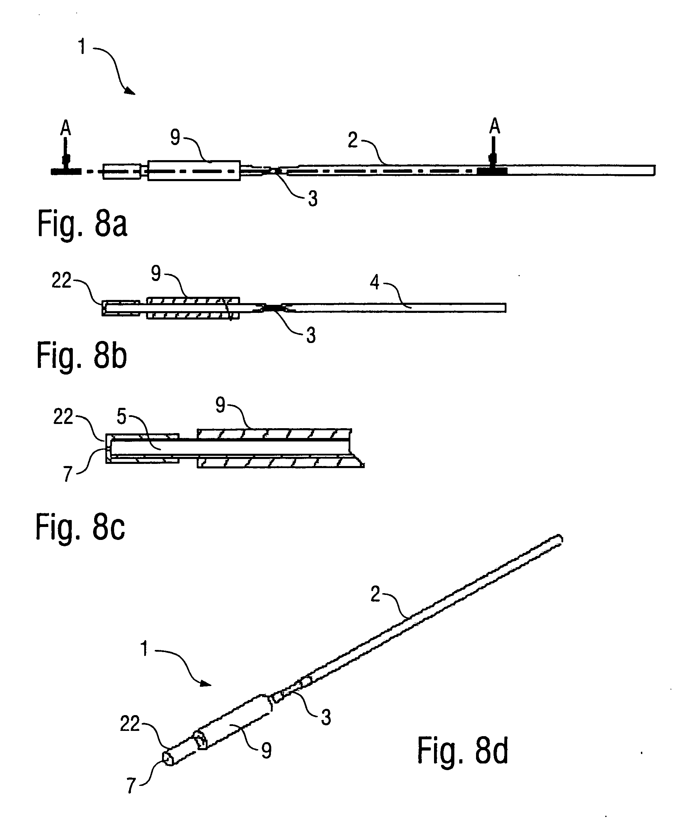

Die Figuren 8a bis 8d zeigen ein weiteres Ausführungsbeispiel eines erfindungsgemäßen Mikrodispensers 1, das wiederum weitgehend mit dem vorstehend beschriebenen und in den Figuren 7a und 7b dargestellten Ausführungsbeispiel übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass die Düse 7 durch eine Düsenkappe 22 gebildet wird, die auf das vordere Ende des Arbeitsraums 5 aufgesteckt ist und in ihrer Stirnfläche eine Düsenöffnung aufweist. Die Düsengeometrie wird hierbei also nicht durch die Form der Öffnung in dem Arbeitsraum 5 bestimmt, was bei der Gestaltung der Düsengeometrie einen größeren konstruktiven Gestaltungsspielraum eröffnet.

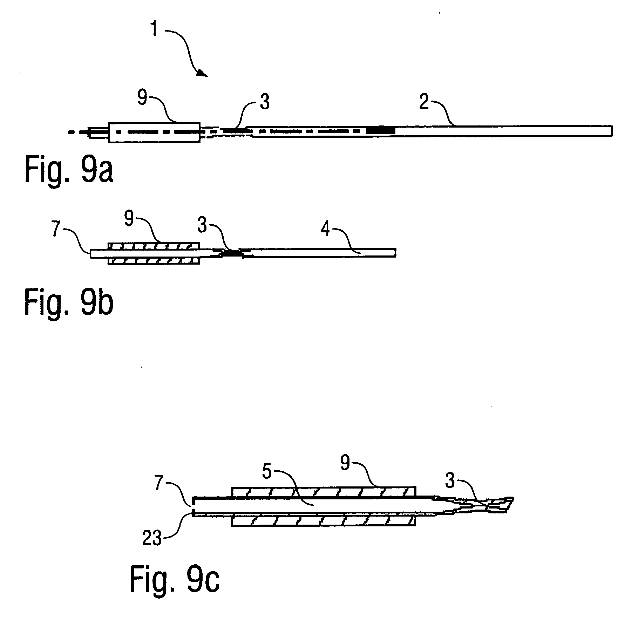

Die Figuren 9a bis 9c zeigen ein weiteres Ausführungsbeispiel eines erfindungsgemäßen Mikrodispensers 1, das wiederum weitgehend mit dem vorstehend beschriebenen und in den Figuren 7a und 7b dargestellten Ausführungsbeispiel übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass die Düse 7 durch eine Düsenfolie 23 gebildet wird, die auf das vordere Ende des Arbeitsraums 5 aufgeklebt oder aufgeschweißt ist und mittig eine Düsenöffnung aufweist. Die Düsengeometrie wird hierbei also ebenfalls nicht durch die Form der Öffnung in dem Arbeitsraum 5 bestimmt, was bei der Gestaltung der Düsengeometrie einen größeren konstruktiven Gestaltungsspielraum eröffnet.

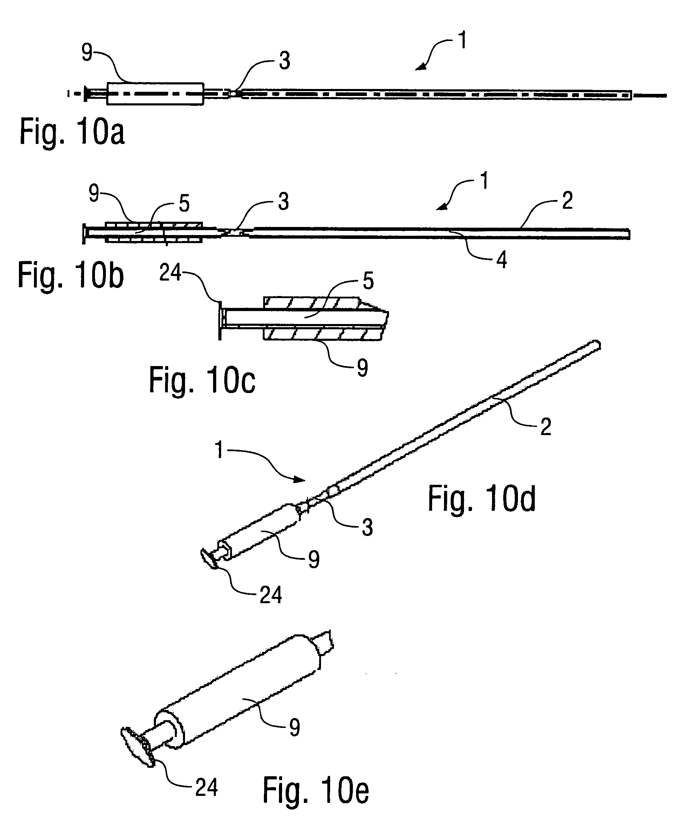

Die Figuren 10a bis 10e zeigen ein weiteres Ausführungsbeispiel eines erfindungsgemäßen Mikrodispensers 1, das wiederum weitgehend mit dem vorstehend beschriebenen und in den Figuren 7a und 7b dargestellten Ausführungsbeispiel übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass die Düse 7 durch eine Verschlussfolie 24 verschlossen ist, die während der Lagerung und des Transports des Mikrodispensers verhindert, dass über die Düse 7 Probenflüssigkeit aus dem Probenbehälter 2 austreten kann. Vor dem Dispensieren wird die Verschlussfolie 24 dann einfach von der Düse 7 abgezogen, wobei das Abziehen der Verschlussfolie 24 von der Düse 7 durch seitlich abstehende Grifflaschen erleichtert wird.

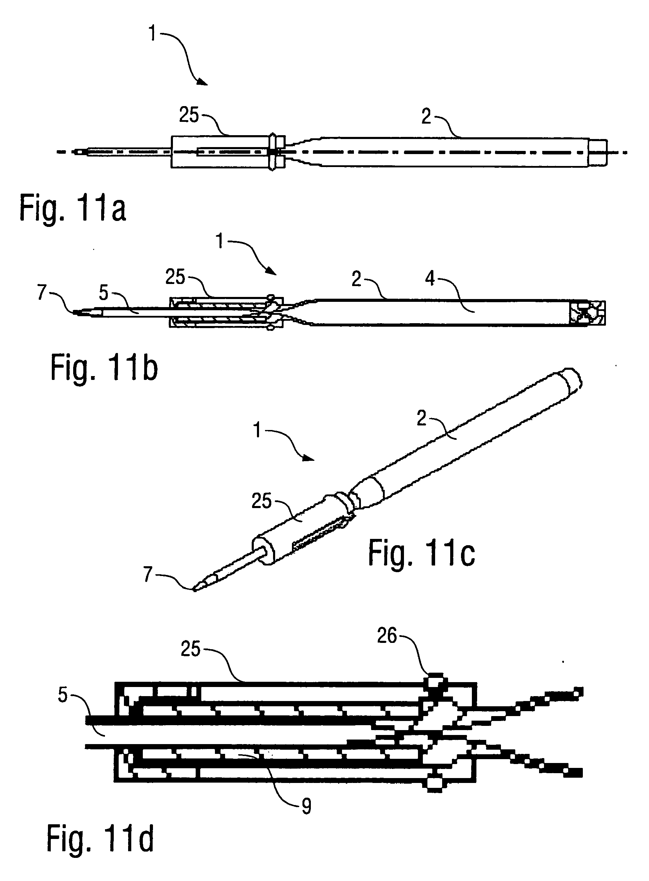

Die Figuren 11a und 11c zeigen ein weiteres Ausführungsbeispiel eines erfindungsgemäßen Mikrodispensers 1, das wiederum weitgehend mit den vorstehend beschriebenen Ausführungsbeispielen übereinstimmt, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass der Piezoaktor 9 axial auf den Probenbehälter 2 aufgesteckt ist, wobei der Piezoaktor 9 an einem ringförmig umlaufenden Anschlag anstößt. Zur mechanischen Fixierung des Piezoaktors 9 auf dem Mikrodispenser 1 ist eine Montagehülse 25 vorgesehen, die axial auf den Piezoaktor 9 aufgesteckt ist und beidseitig jeweils einen axial verlaufenden Schlitz aufweist, der eine leichte radiale Dehnung der Montagehülse 25 erlaubt, wodurch das Aufstecken der Montagehülse 25 erleichtert wird. Nach dem Aufstecken der Montagehülse 25 wird diese durch einen Sicherungsring 26 mechanisch fixiert.

Die Erfindung ist nicht auf die vorstehend beschriebenen bevorzugten Ausführungsbeispiele beschränkt. Vielmehr ist eine Vielzahl technischer Aquivalente möglich, die ebenfalls in den Schutzbereich fallen.

### Bezugszeichenliste

- 1: Mikrodispenser
- 2: Probenbehälter
- 3: Engstelle
- 4: Probenreservoir
- 5: Arbeitsraum
- 6: Schwamm
- 7: Düse
- 8: Mikrotropfen
- 9: Piezoaktor
- 10: Strichcode
- 11: Ventil
- 12: Querschnittserweiterung
- 13: Ventilgehäuse
- 14: Ventilkugel
- 15: Spiralfeder
- 16: Ventilsitz
- 17: Sieb
- 18: Stopfen
- 19: Dichtrippen
- 20: Stempel
- 21: Stopfen
- 22: Düsenkappe
- 23: Düsenfolie
- 24: Verschlussfolie
- 25: Montagehülse
- 26: Sicherungsring

## Patentansprüche

1. Mikrodispenser (1), der in ein Dispensiergerät eingesetzt werden kann, zum Dispensieren einer flüssigen Probe, mit
a) einem Probenbehälter (2) zur Aufnahme der flüssigen Probe und
b) einer Düse (7) zur Abgabe der in dem Probenbehälter (2) befindlichen Probe in Form von Mikrotropfen,
c) wobei der Mikrodispenser (1) unabhängig und fluidisch getrennt von dem Dispensiergerät mit dem befüllten Probenbehälter (2) lagerungsfähig ist, ohne dass die Probe während der Lagerung aus dem Probenbehälter (2) entweicht,
d) während der Probenbehälter (2) ein integriertes Probenreservoir (4) aufweist, um ohne eine Wiederbefüllung nacheinander mehrere Proben abgeben zu können,
**dadurch gekennzeichnet, dass** der Mikrodispenser während des Transports und der Lagerung vollständig geschlossen ist, so dass der Mikrodispenser (1) nach einem Dispensiervorgang wieder einlagerbar ist, ohne dass die Probenflüssigkeit während der Lagerung aus dem Probenbehälter (2) entweicht.

2. Mikrodispenser nach Anspruch 1, **gekennzeichnet durch** eine Auslegung für eine Einwegnutzung, wobei der Probenbehälter (2) nicht wiederbefüllbar ist.

3. Mikrodispenser nach einem der vorhergehenden Ansprüche, **dadurch gekennzeichnet, dass** der Probenbehälter (2) bis auf die Düse (7) vollständig geschlossen ist und abgesehen von der Düse (7) keine Öffnung aufweist.

4. Mikrodispenser nach einem der Ansprüche 1 oder 2, **gekennzeichnet durch** ein Ventil (11) zur Belüftung des Probenbehälters (2) beim Dispensieren und/oder zum Befüllen des Probenbehälters (2).

5. Mikrodispenser nach Anspruch 4, **dadurch gekennzeichnet, dass** das Ventil (11) durch eine Schrumpfverbindung oder durch eine Verklebung mit dem Probenbehälter (2) verbunden ist.

6. Mikrodispenser nach einem der vorhergehenden Ansprüche, **gekennzeichnet durch** eine Markierung (10), die Informationen über den Mikrodispenser (1) und/oder die in dem Probenbehälter (2) befindliche Probe enthält.

7. Mikrodispenser nach Anspruch 6, **dadurch gekennzeichnet, dass** die Markierung (10) ein optischer Code, insbesondere ein eindimensionaler oder zweidimensionaler Strichcode, oder ein Transponder ist.

8. Mikrodispenser nach Anspruch 7, **dadurch gekennzeichnet, dass** der Transponder einen ersten Speicherbereich und einen zweiten Speicherbereich aufweist, wobei der erste Speicherbereich nur auslesbar ist, während der zweite Speicherbereich auch wieder beschreibbar ist.

9. Mikrodispenser nach einem der vorhergehenden Ansprüche, **dadurch gekennzeichnet, dass** in dem Probenbehälter (2) ein Schwamm (6) angeordnet ist, der durch die auf die flüssige Probe wirkenden Kapillarkräfte einen Halteunterdruck in dem Probenbehälter (2) erzeugt.

10. Mikrodispenser nach einem der vorhergehenden Ansprüche, **dadurch gekennzeichnet, dass** der Probenbehälter (2) innen einen Querschnittssprung (3, 12) aufweist.

11. Mikrodispenser nach Anspruch 10, **dadurch gekennzeichnet, dass** der Querschnittssprung (3, 12) entweder eine Engstelle (3) oder eine Querschnittserweiterung (12) ist.

12. Mikrodispenser nach einem der vorhergehenden Ansprüche, **dadurch gekennzeichnet, dass** der Probenbehälter (2) und/oder die Düse (7) aus Kunststoff oder Glas oder Keramik besteht.

13. Mikrodispenser nach einem der vorhergehenden Ansprüche, **gekennzeichnet durch** einen Aktor (9) zum Ausstoßen der in dem Probenbehälter (2) befindlichen Probe **durch** die Düse (7).

14. Mikrodispenser nach Anspruch 13, **dadurch gekennzeichnet, dass** der Aktor (9) baulich in den Mikrodispenser (1) integriert ist.

15. Mikrodispenser nach Anspruch 13, **dadurch gekennzeichnet, dass** der Aktor (9) von dem Mikrodispenser (1) baulich getrennt ist.

16. Mikrodispenser nach einem der vorhergehenden Ansprüche, **dadurch gekennzeichnet, dass** der Aktor (9) stoffschlüssig, reibschlüssig und/oder formschlüssig mit dem Probenbehälter (2) verbunden ist.

17. Mikrodispenser nach einem der Ansprüche 13 bis 16, **dadurch gekennzeichnet, dass** der Aktor (9) ein Piezoaktor ist.

18. Mikrodispenser nach einem der vorhergehenden Ansprüche, **dadurch gekennzeichnet, dass** der Aktor (9) den Probenbehälter (2) außen hülsenförmig und den Probenbehälter (2) bei einer elektrischen Ansteuerung des Aktors (9) zusammendrückt und/oder ausdehnt.

19. Mikrodispenser nach einem der vorhergehenden Ansprüche, **dadurch gekennzeichnet, dass** der der Aktor (9) auf dem Probenbehälter (2) durch eine Montagehülse (25) fixiert ist.

20. Mikrodispenser nach Anspruch 19, **dadurch gekennzeichnet, dass** die Montagehülse (25) einen axial verlaufenden Federschlitz aufweist.

21. Mikrodispenser nach Anspruch 19 oder 20, **dadurch gekennzeichnet, dass** die Montagehülse (25) auf dem Probenbehälter (2) durch eine Verschraubung oder durch einen Sicherungsring (26) fixiert ist.

22. Mikrodispenser nach einem der vorhergehenden Ansprüche, **dadurch gekennzeichnet, dass** die Düse (7) und/oder der Probenbehälter (2) mit einer Beschichtung versehen ist, wobei die Beschichtung vorzugsweise Protein-immobilisierend oder DNA-immobilisierend wirkt, eine spezifische Adsorption von Biomolekülen zulässt, eine Koagulation einer eingefüllten Probe verhindert, und/oder für eine Aufreinigung und/oder Aufkonzentration der Probe geeignet ist.

23. Mikrodispenser nach einem der vorhergehenden Ansprüche, **dadurch gekennzeichnet, dass** die Düse (7) zur Lagerung verschlossen ist.

24. Mikrodispenser nach Anspruch 23, **dadurch gekennzeichnet, dass** die Düse (7) zur Lagerung durch einen Stopfen (18), eine Verschlussfolie (24), durch Wachs oder durch eine Verschlusskappe verschlossen ist.

25. Mikrodispenser nach einem der vorhergehenden Ansprüche, **dadurch gekennzeichnet, dass** der Probenbehälter (2) ein Volumen im Bereich von 1 nl bis 1 ml aufweist.

26. Mikrodispenser nach einem der vorhergehenden Ansprüche, **dadurch gekennzeichnet, dass** die Düse (7) einen Düsendurchmesser im Bereich von 10 µm bis 100 µm aufweist.

27. Mikrodispenser nach einem der vorhergehenden Ansprüche, **dadurch gekennzeichnet, dass** der Probenbehälter (2) zusätzlich zu dem Probenreservoir (4) einen Arbeitsraum (5) aufweist, der von dem Probenreservoir (4) durch eine Engstelle (3) getrennnt ist, wobei das Probenreservoir (4) ein größeres Volumen aufweist als der Arbeitsraum (5).

28. Mikrodispenser nach einem der vorhergehenden Ansprüche, **dadurch gekennzeichnet, dass** die Düse (7) durch eine Düsenfolie (23) oder eine Düsenkappe (22) oder einen Düsenstopfen gebildet wird.

29. Dispensiergerät mit mindestens einem Mikrodispenser (1) nach einem der Ansprüche 13 bis 28, wobei das Dispensiergerät die Ansteuerung des Aktors (9) zur Tropfenabgabe bewirkt.

30. Dispensiergerät nach Anspruch 29, **dadurch gekennzeichnet, dass** keine Probenzuleitung für den Mikrodispenser (1) vorgesehen ist.

31. Betriebsverfahren für einen Mikrodispenser (1) gemäß Anspruch 1, der einen Probenbehälter (2) zur Aufnahme einer flüssigen Probe und eine Düse (7) zur Abgabe der Probe in Form von Mikrotropfen aufweist, wobei der Mikrodispenser (1) mit einem mit der flüssigen Probe gefüllten Probenbehälter (2) getrennt von einem Dispensiergerät gelagert wird, **dadurch gekennzeichnet, dass** der Mikrodispenser während des Transports und der Lagerung vollständig geschlossen ist, so dass der Mikrodispenser (1) nach einem Dispensiervorgang wieder eingelagert wird, wobei während der Lagerung keine Probenflüssigkeit aus dem Probenbehälter (2) entweicht.

32. Betriebsverfahren nach Anspruch 31, **dadurch gekennzeichnet, dass** der Probenbehälter (2) nicht wiederbefüllt wird und der Mikrodispenser (1) nach einem oder mehreren Dispensiervorgängen entsorgt wird.

33. Betriebsverfahren nach einem der Ansprüche 31 bis 32, **dadurch gekennzeichnet, dass** aus einer an dem Mikrodispenser (1) angebrachten Markierung (10) Informationen über den Mikrodispenser (1) und/oder die in dem Probenbehälter (2) befindliche Probe ausgelesen werden.

34. Betriebsverfahren nach Anspruch 33, **dadurch gekennzeichnet, dass**
- die Informationen während der Lagerung des Mikrodispensers (1) aus der Markierung (10) ausgelesen werden und
- der Mikrodispenser (1) in Abhängigkeit von den ausgelesenen Informationen ausgelagert wird oder eingelagert bleibt.

35. Betriebsverfahren nach einem der Ansprüche 31 bis 34, **dadurch gekennzeichnet, dass** die Düse (7) vor der Lagerung verschlossen und nach der Lagerung geöffnet wird.

36. Betriebsverfahren nach einem der Ansprüche 31 bis 35, **dadurch gekennzeichnet, dass** der Probenbehälter (2) über die Düse (7) durch eine Kapillarwirkung mit der flüssigen Probe befüllt wird.

37. Betriebsverfahren nach Anspruch 31 oder 36, **dadurch gekennzeichnet, dass** der Probenbehälter (2) beim Dispensieren mittels eines Ventils (11) belüftet wird.

38. Betriebsverfahren nach Anspruch 37, **dadurch gekennzeichnet, dass** der Probenbehälter (2) über das Ventil (11) mit der flüssigen Probe befüllt wird.

39. Betriebsverfahren nach einem der Ansprüche 31 bis 38, **dadurch gekennzeichnet, dass** eine Aufreinigung und/oder Aufkonzentration der Probe mit Hilfe einer spezifischen Beschichtung der Düse (7) und/oder des Probenbehälters (2) vorgesehen ist.

## Claims

1. A microdispenser (1) which can be inserted into a dispensing device for dispensing a liquid sample, comprising
a) a sample container (2) for holding the liquid sample and
b) a nozzle (7) for dispensing the sample located in the sample container (2) in the form of micro drops,
c) wherein the microdispenser (1) with the filled sample container (2) can be stored independently of and fluidically separated from the dispensing device, without the sample escaping from the sample container (2) during storage,
d) wherein the sample container (2) comprises an integrated sample reservoir (4) in order to be able to dispense a plurality of samples one after the other without the need for refilling,
**characterized in that**
e) the microdispenser is completely closed during the transport and the stocking, so that the microdispenser (1) can be replaced in stock after a dispensing operation without sample fluid escaping from the sample container (2) during the stocking.

2. The microdispenser according to claim 1, **characterized by** a configuration for single use, wherein the sample container (2) is not refillable.

3. The microdispenser according to any one of the preceding claims, **characterized in that** the sample container (2) is completely closed apart from the nozzle (7) and has no opening apart from the nozzle (7).

4. The microdispenser according to any one of claims 1 or 2, **characterized by** a valve (11) for venting the sample container (2) during the dispensing operation and/or for filling the sample container (2).

5. The microdispenser according to claim 4, **characterized in that** the valve (11) is connected to the sample container (2) by means of a shrink fit or by means of an adhesive join.

6. The microdispenser according to any one of the preceding claims, **characterized by** a marking (10), which contains information about the microdispenser (1) and/or the sample located in the sample container (2).

7. The microdispenser according to claim 6, **characterized in that** the marking (10) is an optical code, in particular a one-dimensional or two-dimensional barcode, or a transponder.

8. The microdispenser according to claim 7, **characterized in that** the transponder has a first memory area and a second memory area, wherein the first memory area is a read-only memory area whereas the second memory area is a read/write memory area.

9. The microdispenser according to any one of the preceding claims, **characterized in that** a sponge (6) is arranged in the sample container (2), which sponge generates a holding vacuum in the sample container (2) due to the capillary forces acting on the liquid sample.

10. The microdispenser according to any one of the preceding claims, **characterized in that** the sample container (2) has a stepped cross section (3, 12) on the inside.

11. The microdispenser according to claim 10, **characterized in that** the stepped cross section (3, 12) is either a narrowing (3) or a widening (12) of the cross section.

12. The microdispenser according to any one of the preceding claims, **characterized in that** the sample container (2) and/or the nozzle (7) is made of plastic or glass or ceramic.

13. The microdispenser according to any one of the preceding claims, **characterized by** an actuator (9) for discharging the sample located in the sample container (2) through the nozzle (7).

14. The microdispenser according to claim 13, **characterized in that** the actuator (9) is structurally integrated in the microdispenser (1).

15. The microdispenser according to claim 13, **characterized in that** the actuator (9) is structurally separate from the microdispenser (1).

16. The microdispenser according to any one of the preceding claims, **characterized in that** the actuator (9) is connected to the sample container (2) by means of a material fit, friction fit and/or form fit.

17. The microdispenser according to any one of claims 13 to 16, **characterized in that** the actuator (9) is a piezo actuator.

18. The microdispenser according to any one of the preceding claims, **characterized in that** the actuator (9) surrounds the outside of the sample container (2) in the manner of a sleeve and compresses and/or expands the sample container (2) upon electrical actuation of the actuator (9).

19. The microdispenser according to any one of the preceding claims, **characterized in that** the actuator (9) is fixed on the sample container (2) by means of a mounting sleeve (25).

20. The microdispenser according to claim 19, **characterized in that** the mounting sleeve (25) has a spring slot, which runs in the axial direction.

21. The microdispenser according to claim 19 or 20, **characterized in that** the mounting sleeve (25) is fixed on the sample container (2) by screwing or by means of a securing ring (26).

22. The microdispenser according to any one of the preceding claims, **characterized in that** the nozzle (7) and/or the sample container (2) is provided with a coating, wherein the coating preferably acts in a protein-immobilizing or DNA-immobilizing manner, permits specific adsorption of biomolecules, prevents coagulation of a contained sample and/or is suitable for purifying and/or concentrating the sample.

23. The microdispenser according to any one of the preceding claims, **characterized in that** the nozzle (7) is closed for storage purposes.

24. The microdispenser according to claim 23, **characterized in that** the nozzle (7) is closed for storage purposes by means of a stopper (18), a closure film (24), by means of wax or by means of a closure cap.

25. The microdispenser according to any one of the preceding claims, **characterized in that** the sample container (2) has a volume in the range from 1 nl to 1 ml.

26. The microdispenser according to any one of the preceding claims, **characterized in that** the nozzle (7) has a nozzle diameter in the range from 10 µm to 100 µm.

27. The microdispenser according to any one of the preceding claims, **characterized in that** the sample container (2) has a working chamber (5) in addition to the sample reservoir (4), wherein the sample reservoir (4) has a larger volume than the working chamber (5).

28. The microdispenser according to any one of the preceding claims, **characterized in that** the nozzle (7) is formed by a nozzle film (23) or a nozzle cap (22) or a nozzle stopper.

29. A dispensing device comprising at least one microdispenser (1) according to any one of the preceding claims.

30. The dispensing device according to claim 29, **characterized in that** no sample supply line for the microdispenser (1) is provided.

31. An operating method for a microdispenser (1) according to claim 1, which comprises a sample container (2) for holding a liquid sample and a nozzle (7) for dispensing the sample, wherein the microdispenser (1) with a sample container (2) filled with the liquid sample is stored separately from a dispensing device, **characterized in that** the microdispenser is completely closed during the transport and the stocking, so that the microdispenser is replaced in stock after a dispensing operation without sample fluid escaping from the sample container (2) during the stocking.

32. The operating method according to claim 31, **characterized in that** the sample container (2) is not refilled and the microdispenser (1) is disposed of after one or more dispensing operations.

33. The operating method according to any one of claims 31 to 32, **characterized in that** information about the microdispenser (1) and/or the sample located in the sample container (2) is read from a marking (10) attached to the microdispenser (1).

34. The operating method according to claim 33, **characterized in that**
- the information is read from the marking (10) during storage of the microdispenser (1) and
- the microdispenser (1) is removed from storage or remains in storage depending on the information that is read.

35. The operating method according to any one of claims 31 to 34, **characterized in that** the nozzle (7) is closed prior to storage and opened after storage.

36. The operating method according to any one of claims 31 to 35, **characterized in that** the sample container (2) is filled with the liquid sample through the nozzle (7) by means of a capillary action.

37. The operating method according to claim 31 or 36, **characterized in that** the sample container (2) is vented by means of a valve (11) during the dispensing operation.

38. The operating method according to claim 37, **characterized in that** the sample container (2) is filled with the liquid sample through the valve (11).

39. The operating method according to any one of claims 31 to 38, **characterized in that** purification and/or concentration of the sample is provided by means of a specific coating of the nozzle (7) and/or of the sample container (2).

## Revendications

1. Microdistributeur (1), pouvant s'insérer dans un appareil de distribution pour distribuer un échantillon liquide, comprenant
a) un récipient pour échantillon (2) pour recevoir l'échantillon liquide, et
b) une buse (7) pour délivrer sous forme de microgouttelettes l'échantillon qui se trouve dans le récipient pour échantillon (2),
c) dans lequel le microdistributeur (1) peut être stocké avec le récipient pour échantillon (2) rempli, indépendamment et en étant fluidiquement séparé de l'appareil de distribution, sans que l'échantillon ne s'échappe du récipient pour échantillon (2) pendant le stockage,
d) alors que le récipient pour échantillon (2) présente un réservoir d'échantillons (4) intégré afin de pouvoir délivrer plusieurs échantillons les uns après les autres sans recharge,
**caractérisé en ce que**
e) le microdistributeur est complètement fermé pendant le transport et le stockage, de sorte qu'après une opération de distribution, le microdistributeur (1) peut être remis en stock sans que le liquide d'échantillon ne s'échappe du récipient pour échantillon (2) pendant le stockage.

2. Microdistributeur selon la revendication 1, **caractérisé par** une conception destinée à un usage unique, dans lequel le récipient pour échantillon (2) n'est pas rechargeable.

3. Microdistributeur selon l'une quelconque des revendications précédentes, **caractérisé en ce que** le récipient pour échantillon (2) est complètement fermé à l'exception de la buse (7) et ne présente aucune ouverture excepté la buse (7).

4. Microdistributeur selon l'une quelconque des revendications 1 ou 2, **caractérisé par** une vanne (11) pour aérer le récipient pour échantillon (2) lors de la distribution et/ou du remplissage du récipient pour échantillon (2).

5. Microdistributeur selon la revendication 4, **caractérisé en ce que** la vanne (11) est reliée au récipient pour échantillon (2) par un assemblage par retrait ou par collage.

6. Microdistributeur selon l'une quelconque des revendications précédentes, **caractérisé par** un marquage (10) contenant des informations concernant le microdistributeur (1) et/ou l'échantillon se trouvant dans le récipient pour échantillon (2).

7. Microdistributeur selon la revendication 6, **caractérisé en ce que** le marquage (10) est un code optique, en particulier un code à barres unidimensionnel ou bidimensionnel, ou un transpondeur.

8. Microdistributeur selon la revendication 7, **caractérisé en ce que** le transpondeur présente une première zone de mémoire et une deuxième zone de mémoire, dans lequel la première zone de mémoire peut être lue uniquement lorsque la deuxième zone de mémoire est également réinscriptible.

9. Microdistributeur selon l'une quelconque des revendications précédentes, **caractérisé en ce que** dans le récipient pour échantillon (2) est disposée une éponge (6) générant une dépression de maintien dans le récipient pour échantillon (2) par l'intermédiaire des forces capillaires agissant sur l'échantillon liquide.

10. Microdistributeur selon l'une quelconque des revendications précédentes, **caractérisé en ce que** le récipient pour échantillon (2) présente à l'intérieur un saut de section transversale (3, 12).

11. Microdistributeur selon la revendication 10, **caractérisé en ce que** le saut de section transversale (3, 12) est soit un étranglement (3) soit un élargissement de section transversale (12).

12. Microdistributeur selon l'une quelconque des revendications précédentes, **caractérisé en ce que** le récipient pour échantillon (2) et/ou la buse (7) se compose de matière plastique ou de verre ou de céramique.

13. Microdistributeur selon l'une quelconque des revendications précédentes, **caractérisé par** un actionneur (9) pour expulser à travers la buse (7) l'échantillon se trouvant dans le récipient pour échantillon (2).

14. Microdistributeur selon la revendication 13, **caractérisé en ce que** l'actionneur (9) est par construction intégré dans le microdistributeur (1).

15. Microdistributeur selon la revendication 13, **caractérisé en ce que** l'actionneur (9) est par construction séparé du microdistributeur (1).

16. Microdistributeur selon l'une quelconque des revendications précédentes, **caractérisé en ce que** l'actionneur (9) est relié au récipient pour échantillon (2) par contact de matière, par friction et/ou par complémentarité de forme.

17. Microdistributeur selon l'une quelconque des revendications 13 à 16, **caractérisé en ce que** l'actionneur (9) est un actionneur piézoélectrique.

18. Microdistributeur selon l'une quelconque des revendications précédentes, **caractérisé en ce que** l'actionneur (9) comprime et/ou dilate le récipient pour échantillon (2) à l'extérieur en forme de douille lors d'une excitation électrique de l'actionneur (9).

19. Microdistributeur selon l'une quelconque des revendications précédentes, **caractérisé en ce que** l'actionneur (9) est fixé sur le récipient pour échantillon (2) par une douille de montage (25).

20. Microdistributeur selon la revendication 19, **caractérisé en ce que** la douille de montage (25) présente une fente élastique s'étendant axialement.

21. Microdistributeur selon la revendication 19 ou 20, **caractérisé en ce que** la douille de montage (25) est fixée sur le récipient pour échantillon (2) par un vissage ou par un circlip (26).

22. Microdistributeur selon l'une quelconque des revendications précédentes, **caractérisé en ce que** la buse (7) et/ou le récipient pour échantillon (2) est muni(e) d'un revêtement, dans lequel le revêtement a de préférence un effet d'immobilisation des protéines et d'immobilisation de l'ADN, permet une adsorption spécifique de biomolécules, empêche une coagulation d'un échantillon versé et/ou convient à la purification et/ou la concentration de l'échantillon.

23. Microdistributeur selon l'une quelconque des revendications précédentes, **caractérisé en ce que** la buse (7) est fermée en vue du stockage.

24. Microdistributeur selon la revendication 23, **caractérisé en ce qu'**en vue du stockage, la buse (7) est fermée par un bouchon (18), un film de scellement (24), de la cire ou un capuchon.

25. Microdistributeur selon l'une quelconque des revendications précédentes, **caractérisé en ce que** le récipient pour échantillon (2) présente un volume dans la plage de 1 nl à 1 ml.

26. Microdistributeur selon l'une quelconque des revendications précédentes, **caractérisé en ce que** la buse (7) présente un diamètre de buse dans la plage de 10 µm à 100 µm.

27. Microdistributeur selon l'une quelconque des revendications précédentes, **caractérisé en ce que** le récipient pour échantillon (2) présente en plus du réservoir d'échantillon (4) un espace utile (5) qui est séparé du réservoir d'échantillon (4) par un étranglement (3), dans lequel le réservoir d'échantillon (4) présente un plus grand volume que l'espace utile (5).

28. Microdistributeur selon l'une quelconque des revendications précédentes, **caractérisé en ce que** la buse (7) est formée par un film de buse (23) ou un capuchon de buse (22) ou un bouchon de buse.

29. Appareil de distribution avec au moins un microdistributeur (1) selon l'une quelconque des revendications 13 à 28, dans lequel l'appareil de distribution provoque l'excitation de l'actionneur (9) pour délivrer des gouttelettes.

30. Appareil de distribution selon la revendication 29, **caractérisé en ce qu'**aucune amenée d'échantillon n'est prévue pour le microdistributeur (1).

31. Procédé d'utilisation pour un microdistributeur (1) selon la revendication 1, présentant un récipient pour échantillon (2) pour recevoir un échantillon liquide et une buse (7) pour délivrer l'échantillon sous la forme de microgouttelettes, dans lequel le microdistributeur (1) avec le récipient pour échantillon (2) contenant l'échantillon liquide est stocké séparément d'un appareil de distribution, **caractérisé en ce que** le microdistributeur (1) est complètement fermé pendant le transport et le stockage de sorte que le microdistributeur (1) est remis en stock après une opération de distribution, dans lequel pendant le stockage, aucun liquide d'échantillon ne s'échappe du récipient pour échantillon (2).

32. Procédé d'utilisation selon la revendication 31, **caractérisé en ce que** le récipient pour échantillon (2) n'est pas rechargé et le microdistributeur (1) est jeté après une ou plusieurs opérations de distribution.

33. Procédé d'utilisation selon l'une quelconque des revendications 31 à 32, **caractérisé en ce qu'**à partir d'un marquage (10) appliqué sur le microdistributeur (1), des informations concernant le microdistributeur (1) et/ou l'échantillon se trouvant dans le récipient pour échantillon (2) sont lues.

34. Procédé d'utilisation selon la revendication 33, **caractérisé en ce que**
- les informations sont lues à partir du marquage (10) pendant le stockage du microdistributeur (1), et
- le microdistributeur (1) est sorti du stock ou reste en stock en fonction des informations lues.

35. Procédé d'utilisation selon l'une quelconque des revendications 31 à 34, **caractérisé en ce que** la buse (7) est fermée avant le stockage et ouverte après le stockage.

36. Procédé d'utilisation selon l'une quelconque des revendications 31 à 35, **caractérisé en ce que** le récipient pour échantillon (2) est rempli avec l'échantillon liquide par l'intermédiaire de la buse (7) par un effet de capillarité.

37. Procédé d'utilisation selon la revendication 31 ou 36, **caractérisé en ce que** le récipient pour échantillon (2) est aéré lors de la distribution au moyen d'une vanne (11).

38. Procédé d'utilisation selon la revendication 37, **caractérisé en ce que** le récipient pour échantillon (2) est rempli avec l'échantillon liquide par l'intermédiaire de la vanne (11).

39. Procédé d'utilisation selon l'une quelconque des revendications 31 à 38, **caractérisé en ce qu'**une purification et/ou concentration de l'échantillon est/sont prévue(s) à l'aide d'un revêtement spécifique de la buse (7) et/ou du récipient pour échantillon (2).
